# EUROPEAN PATENT APPLICATION

(11) **EP 4 488 858 A1**
(43) Date of publication of application: **08.01.2025**
(21) Application number: 23315274.3
(22) Date of filing: 07.07.2023
(51) Int. Cl.: G06F 21/14, G06F 21/53

(54) **DIVERSIFIED VIRTUAL MACHINE FOR SECURE IOT DEVICES**

(71) Applicant: THALES DIS FRANCE SAS, 92190 Meudon (FR)
(72) Inventor: GARREAU, Eric, 83210 LA FARLEDE (FR); DEMARTY, Joel, 35520 MONTREUIL LE GAST (FR)
(74) Representative: Bricks, Amélie

(57) **Abstract**

Securing of Internet of Things (IoT) devices by compiling IoT applications against diversified virtual machines. IoT protection sets are defined and assigned diversification parameters. A virtual machine is diversified using the assigned parameters. An IoT application is diversified against the diversified virtual machine to be solely executable by the diversified virtual machines by applying the diversification parameters associated with the virtual machines, respectively. Loading diversified object programs for the diversified IoT applications and diversified virtual machines corresponding to respective loT devices associated with the protection sets.

## Description

### BACKGROUND OF THE INVENTION

The present invention relates, generally, to cyber security, and, more particularly, to security for Internet of Things (IoT) devices.

Implementing Internet capability on a myriad of previously unconnected devices is a recent paradigm shift resulting from the reduction of cost and size of electronic devices coupled with their improved technical capability, for example, higher bandwidth communication and the possibility of implementing a full communications stack on very small low-cost devices. This technology, collectively referred to as Internet of Things (IoT) provides for communication between devices, with the cloud, and for over-the-air data collection and device control.

IoT devices include a vast array of devices including household appliances, such as televisions, vacuum cleaners, kitchen appliances, devices that automate homes, for example, door locks, garage-door openers, electricity meters, devices that automate industrial machines, devices that control and monitor vehicles, for example, dash cameras, door locks, and electric-vehicle chargers. IoT devices can transmit data collected from end users, can be reprogrammed over-the-air, and allow users to set parameters, for example.

The nature of IoT devices is that they are *deployed in the field,* i.e., they are released by manufacturers and device issuers into an environment in which the manufacturers and device issuers have lost physical control over the devices. For example, consider smart electricity meters (for simplicity, referred to as a *smart meter).* These are devices that are deployed at end-users' homes and businesses that are power-company customers. Once installed at a customer facility, the smart meter is no longer under the physical control of neither the meter manufacturer nor the utility company. This situation is often referred to as a *white-box environment.*

In a white-box environment an attacker has full physical control over a device that the attacker may wish to attack. Attacks come in many forms. An attacker may simply wish to determine the core IP of the manufacturer a device for the purpose of determining how the device works. *Core IP,* named from *intellectual property,* is the design of the physical implementation of an integrated circuit. An attacker may be interested in the core IP for the purpose of making unsanctioned derivatives of the attacked device.

An attacker may be interested in determining something about an end-user of a device. Returning to the example of smart meters, it has been demonstrated that by analyzing electricity consumption it can be possible to determine the content being viewed by a utility customer on the utility customer's television set. Such an astonishing result can, thus, be used to invade the customer's privacy and to feed the customer targeted advertising. If an end user divulges other confidential information to their IoT devices, e.g., account numbers, passwords, decryption keys, health records, successful attack against information held by the IoT device can put an end-user in very precarious situations.

Furthermore, an attacker may have more serious nefarious purposes in mind. For example, in the context of smart meters, one can imagine a terrorist or blackmail attack in which code is injected into the smart meters of an entire customer base of a utility company to either shut down the provisioning of power to the customers or threatening such an action in exchange for payment of a ransom. In the spring of 2021, the southern states of the United States experienced such an attack against a large network of petrol stations making the sale of petrol impossible for a period of time until, possibly, a ransom was paid. David E. Sanger et al., New York Times, Cyberattack Forces a Shutdown of a Top U.S. Pipeline, 13 May 2021. While that attack may have been at a different level, e.g., against servers, one can envision a similar attack being implemented against IoT devices positioned in petrol-vending pumps.

The aforementioned attacks can come in many different forms, for example, side-channel and fault-injection attacks. Side-channel attacks are based on analyzing side-channel data, e.g., power consumption, emitted by a device to discern some aspect of the execution of programs running on a device. Side-channel attacks are described in greater detail in Mark Randolph and William Diehl, Power Side-Channel Attack Analysis: A Review of 20 Years of Study for the Layman, Cryptography, 4(2):15, 2020 , the entire disclosure of which is incorporated herein by reference. Fault-injection attacks are based on insertion of code into an application executing on a device to cause an execution error from which data can be discerned, for example, via a debugger. Fault-injection attacks are described in A. Barenghi, L. Breveglieri, I. Koren and D. Naccache, "Fault Injection Attacks on Cryptographic Devices: Theory, Practice, and Countermeasures," in Proceedings of the IEEE, vol. 100, no. 11, pp. 3056-3076, Nov. 2012, doi: 10.1109/JPROC:2012.2188769., the entire disclosure of which is incorporated herein by reference.

IoT devices are usually low cost, constrained devices with no or minimal integrated secure enclave made of standard off-the-shelf processing units, for example, microcontrollers, such as the ARM M4 family from Infineon AG of Munich, Germany, CPUs, such as the I.MX family of processors from NXP Semiconductors N.V. of Eindhoven, Netherlands), and graphic processor units (GPUs) such as the Tegra family from NVIDIA Corporation, of Santa Clara, California, USA, as well as,' proprietary hardware IP. Thus, IoT devices are developed on generally available of-the-shelf hardware platforms deployed in a white-box environment.

A common practice in recent IoT development is the use of virtual machine implementations for executing IoT applications. Well-known virtual machines include the Java VM from Oracle Corporation of Austin, Texas, USA and .Net virtual machine of Microsoft Corporation of Redmond, Washington, USA. Other virtual machines suitable for IoT development include Dalvik VM from Myriad Group AG and TinyVM an open source virtual machine.

Even if many of these processors are quite powerful, in IoT deployments the devices are typically constrained in terms of memory, including random access memory (RAM) and non-volatile memory (NVM) and the devices have either a very minimal or no secure element or secure enclave. These constraints hinder many defenses against attacks that can be launched in a white-box environment.

Because of the nature of virtual machines, IoT applications that run on a virtual machine is even more vulnerable to the aforementioned attacks because the virtual machine is independent of the hardware on which it runs. Thus, virtual-machine based IoT applications can easily be moved by an attacker into specialized environments tailored for performing attacks on the applications.

Thus, there is a collision of conflicting goals between the trends of increased IoT deployment, heightened risks of cyber-attacks, coupled with an increased interest and regulation to thwart such attacks, and the increased use of virtual machine implementation of IoT technology, which is more vulnerable to attack.

Without a secure element on an IoT device deployed in a white-box environment, defenses against attacks include diversification and obfuscation. In the former, firmware code of an IoT device is modified such that it is bound to individual chips. I.e., the code only runs on one specific device. Therefore, any attack that reveals the firmware code would not be useful against other devices. In the latter, obfuscation, the code is modified so as to be unrecognizable and very difficult to decode, for example, by hiding secrets in obscure ways in the code, installing dummy code, altering the control flow in illogical ways, etc. Unfortunately, pure software-based diversification and obfuscation solutions increase the code size, which is difficult to achieve on memory-constrained devices, as well as, execution time, which can slow down response time of IoT devices to unacceptable levels.

From the foregoing it is apparent that there is a need for an improved method to protect IoT devices against attacks, such as side-channel and fault-injection attacks, as well as, against attacks that are designed to reveal the intellectual property of manufacturers of IoT devices.

### SUMMARY

A technology is described herein for securing Internet of Things (IoT) devices by compiling IoT applications against diversified virtual machines. The technology includes defining at least a first and a second IoT protection set and assigning a first diversification parameter to the first IoT protection set and a second diversification parameter to the second IoT protection set wherein each of a plurality of IoT devices is associated with the first or the second IoT protection set. Further, the technology includes diversifying a virtual machine into a first diversified virtual machine by compiling the virtual machine using the first diversification parameter to define a first ISA having a first set of opcodes interpretable by the first diversified virtual machine and incorporating the first diversified machine into firmware of IoT devices associated with the first protection set, and diversifying the virtual machine into a second diversified virtual machine by compiling the virtual machine using the second diversification parameter to define a second ISA having a second set of opcodes interpretable by the second diversified virtual machine and incorporating the second diversified virtual machine into firmware of IoT devices associated with the second protection set. Further, the technology includes compiling an IoT application against the first diversified virtual machine to generate a first diversified object program corresponding to the IoT application and solely executable by the first diversified virtual machine by applying the first diversification parameter, and compiling the IoT application against the second diversified virtual machine to generate a second diversified object program corresponding to the IoT application and solely executable by the second diversified virtual machine by applying the second diversification parameter. The resulting first diversified object program is loaded onto IoT devices associated with the first protection set and the resulting second diversified object program is loaded onto IoT devices associated with the second protection set.

In an aspect, the technology further includes creating a diversified hardware implementation of an IoT device in the step of diversifying the virtual machine into the first diversified virtual machine by, generating a chip-design for a portion of an IoT chip installable into an IoT device such that the IoT chip is diversified, said portion including opcodes of the diversified virtual machine.

In a further aspect, the technology includes diversifying the IoT application such that the first protection set is assigned a first diversified IoT application, and the second protection set is assigned a second diversified IoT application wherein the first diversified IoT application and second diversified IoT application are functionally identical.

In a further embodiment, the first diversification parameter and second diversification parameter are each a diversification key associated with the first protection set and second protection set, respectively, that may be accepted by a diversification method to produce a unique ISA.

In yet a further embodiment, compiling an IoT application against the first diversified virtual machine is achieved by ciphering a first subset of basic blocks of the IoT application using the first diversification parameter, and
the first virtual machine of the IoT device is operated to recognize ciphered basic blocks and deciphering the ciphered basic blocks prior to execution.

In an alternative, compiling an IoT application against the first diversified virtual machine is achieved by ciphering a third subset of basic blocks of the IoT application using a third diversification parameter associated with a third IoT protection set.

Deciphering may be performed by a deciphering a hardware block activated by instruction fetch of a start instruction introducing a basic block as being ciphered and executing deciphered instructions using a standard instruction set architecture.

In an aspect, the technology further includes execution of a diversified IoT application, detecting ciphered basic blocks, deciphering the ciphered basic blocks producing deciphered basic blocks and executing the deciphered basic blocks by a dummy execution engine and, in parallel, executing the ciphered basic block by a non-dummy execution engine, and detecting unciphered basic blocks, deciphering the unciphered basic blocks producing dummy deciphered basic blocks and executing the dummy deciphered basic blocks by the dummy execution engine, and, in parallel, executing the unciphered basic block by the non-dummy execution engine.

In an alternative, the diversification of the virtual machine includes diversifying the instruction set architecture such that a unique set of opcodes or bytecodes are assigned to each of the first and second protection sets, respectively.

In another alternative, the diversification of the virtual machine includes diversifying the instruction set architecture into a plurality of diversified instruction set architectures assigned to each of the first and second protection sets, respectively, and wherein the compilation of the IoT application against said first diversified virtual machine and said second virtual machine further comprises selecting one of said diversified instruction set architectures for compiling against.

In an aspect, the first and second IoT protection sets are members of a class of protection sets, which may include device family, device model, customer, device batch, and device chip. These may be arranged hierarchically.

In an aspect, the device category of the first or second protection set is selected during a manufacturing phase.

Alternatively, the device category of the first or second protection set is selected during a device issuance phase by selecting a protection set for a device or class of devices in conjunction with compiling the IoT application.

In an aspect a device issuer is provided with a database of protection sets and diversification parameters, and compiling includes retrieving a diversification parameter corresponding to the protection set of a target device.

### BRIEF DESCRIPTION OF THE DRAWINGS

FIG. 1 is an illustration of a network of devices that may be accessed over the Internet for sensor monitoring and device control.
FIG. 2 is an illustration of vehicle having a number of sensors accessible as IoT devices.
FIG. 3 is a high-level block diagram of high-level architecture of an IoT device.
FIG. 4 is a process flow diagram illustrating diversification of a software program.
FIG. 5 is a flow diagram illustrating process and data flow in an embodiment in which both an IoT application source program and a virtual machine are diversified.
FIG. 6 is a flow diagram illustrating an alternative process and data flow in which both an IoT application source program, a virtual machine, and a hardware execution engine are diversified.
FIG. 7 is a schematic illustration of an alternative embodiment that includes an instruction fetch cycle for detecting from which protection set to convert ciphered opcodes to native opcodes of a target processor.
FIG. 8 is a program layout of a program having instructions segments that are compiled against different ISAs.
FIG. 9 is a schematic illustrating an embodiment with a combined mechanism in which the mechanisms of FIGs. 5 through 7 are combined into an integrated mechanism that provides for diversified IoT applications, a diversified software virtual machine, a diversified hardware virtual machine, and a diversified execution engine for executing encoded opcodes.
FIG. 10 is a block diagram illustrating an architecture for an IoT development system programmed to implement the methods described hereinabove.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The herein described technology provides a mechanism to protect IoT devices deployed into a white-box environment against attacks designed to reverse engineer IoT applications or to discern secrets manipulated by IoT applications by diversifying both the IoT applications as well as the execution environments deployed on IoT devices. The diversified execution environments maybe either virtual machines or hardware implemented execution pipelines.

In the technology described herein, IoT applications and execution engines may be both obfuscated and diversified.

*Software obfuscation* refers to changing code such that it becomes very difficult for an attacker to understand or reverse engineer the code while not changing the function of the code.

*Software diversification* is a mechanism of randomizing a software program such that distinct entities have different versions of the same program wherein the versions are functionally the same, but structurally different. The structural differences may include differences in memory layout, i.e., different values at the same memory locations, and may include ISA diversification, i.e., different opcodes (or bytecodes) corresponding to the same instructions.

The "distinct entities" referred to in the prior paragraph may be any grouping of devices. For example, in the context of IoT devices developed by one device manufacturer the groupings may be:
- Family - i.e., each family of devices receive a unique version, but within each family different models, customers (different customers receiving that family, all receive the same version), batches, and individual chips all have the same version.
- Models - i.e., if for a family of devices, there are multiple models, each such model receives a unique version (which implies that the families also have unique versions), whereas customers, batches, and individual chips of each model all have the same version.
- Customers - i.e., different customers receiving a particular device family or device model all receive different versions, whereas different batches and specific devices delivered to one customer all receive the same version.
- Batches - i.e., each production run of a device receives a unique version, whereas individual devices within a batch all receive the same version:
- Chips - i.e., the narrowest grouping, each individual chip has a unique version.

In the present application for patent, a group of devices, whether a family, model, device delivered to a customer, batch, or individual chip is referred to as a *protection set,* i.e., a protection set is the set of devices that share a common version of a diversified software program or that have a unique chip design based on specific diversification parameters. As discussed in greater detail below, an identifier for a particular protection set may be viewed as a key that defines specific diversification parameters for that protection set. Those diversification parameters may be used to diversify, for example, the instruction set for a particular virtual machine or a particular chip or set of chips that correspond to the protection set:
{protection set, diversification parameter, diversification result}
   e.g.,
{protection set, per-VM diversification properties, diversified VM}
   or
{protection set, per-chip diversification properties, diversified execution engine}

As described in greater detailed below, in some embodiments, an IoT application may be protected in multiple protection sets by having a portion of code protected in one protection set and another portion of code protected in a second protection set.

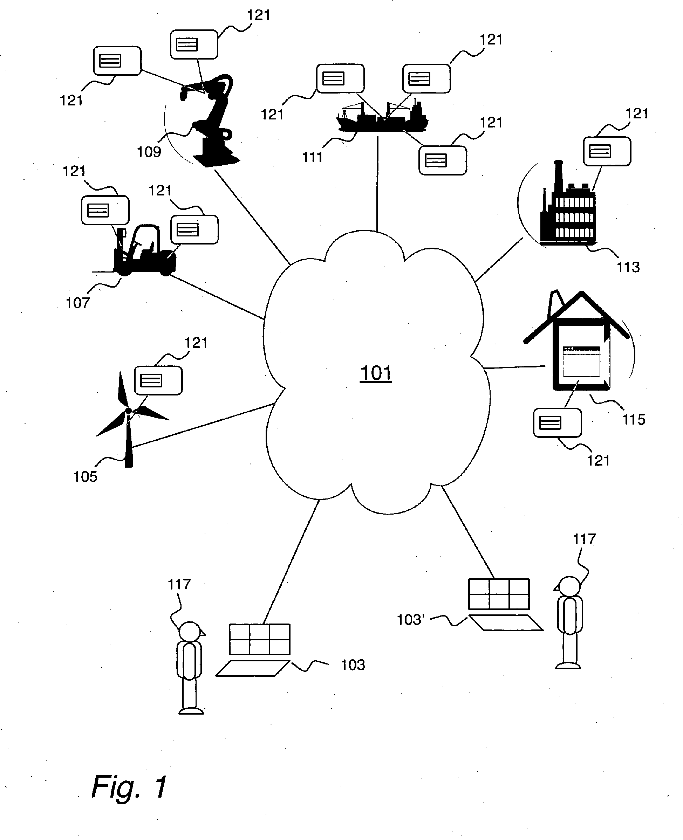

FIG. 1 is an illustration of a network of devices that may be accessed over the Internet for sensor monitoring and device control. A network 101, e.g., the Internet, may connect monitoring computer systems 103 to devices 121 deployed for many different purposes. The devices 121, collectively referred to herein as IoT devices, may be deployed in energy production 105, warehouse operations 107, manufacturing automation 109, transportation 111, intelligent offices 113, homes 115, and in many other contexts. The IoT devices, not directly depicted in FIG. 1, may collect data about the operations in these many scenarios and may be used for controlling devices. For example, in the context of energy production, it may be interesting to remotely monitor energy generation for a particular generation unit, e.g., a windmill, and depending on operating conditions, it may be interesting to manipulate parameters controlling the operation of the energy generating unit. IoT devices are useful for both tasks.

A user 117 may monitor data produced by IoT devices deployed in the network and may control loT-device enabled equipment via computers 103. Of course, the monitoring and control computers may be either fixed computers or mobile devices, such as smart phones.

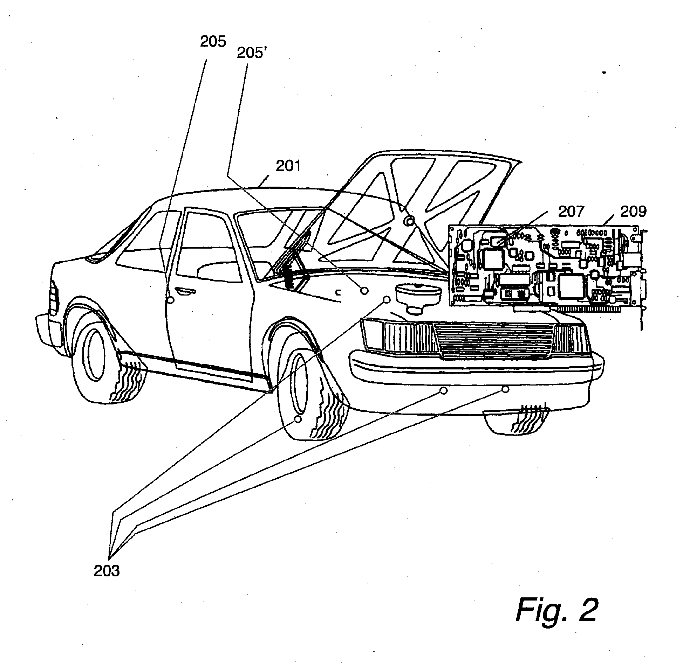

FIG. 2 is an illustration of vehicle 201 having a number of sensors 203 and control mechanisms 205 accessible via an IoT devices 207, which may be a stand-alone unit or a component of some other computerized device, e.g., a vehicle control unit 209. The sensors 203 may, for example, be proximity sensors, velocity sensors, GPS devices, operational status sensors indicating, for example, engine performance data. The control mechanisms may be, for example, door lock actuators 205 or a controller 205' that enables or disables the ignition system of the vehicle 201.

Of course, the developers of such vehicle automation systems have an interest in protecting application programs deployed on the vehicle IoT device 207 from being tampered with or being appropriated in some fashion. For example, attacks against a locking mechanism and a system that enables or disables a vehicle could enable an attacker to steal a vehicle or its contents and with the inherent danger of operations of motor vehicles, malfeasance could result in property damage, and personal injury or death to motorists.

Similar threats are present in nearly all deployments of IoT devices. For example, IoT devices used in power delivery could be attacked to cause blackouts, IoT devices used in industry could be attacked to cause supply chain disruptions, etc.

Furthermore, as IoT devices are used to collect much data, attacks can raise privacy concerns and concerns about whether accurate data is being reported.

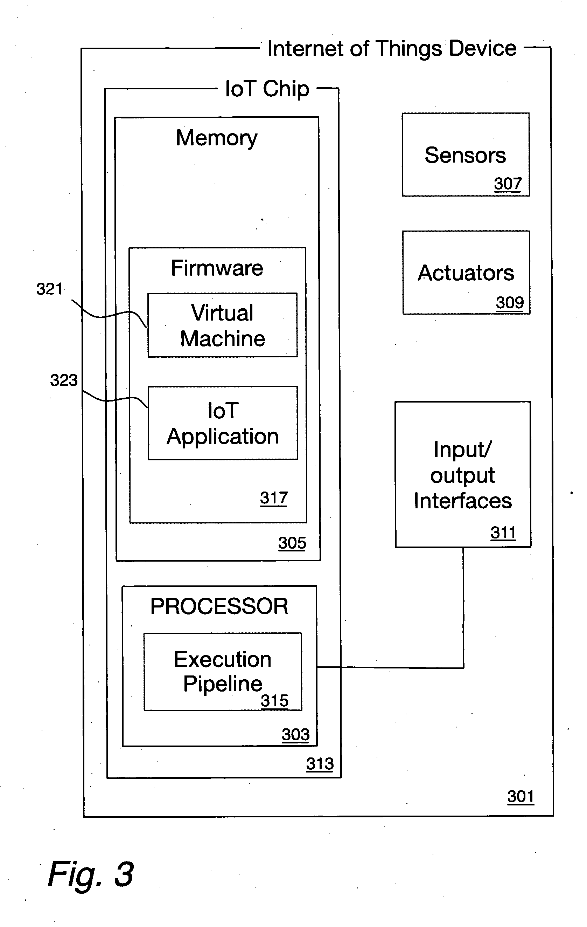

FIG. 3 is a high-level block diagram of high-level architecture of an IoT device 301. It should be noted at the onset, FIG. 3 is just one possible architecture and that other designs for IoT devices would benefit equally from the technology described herein. An IoT device 301 includes a processor 303, a memory 305, and may include one or more on-board sensors 307 and actuators 309. However, often an IoT device 301 accesses external sensors (not shown) and actuators (also not shown) as illustrated in FIG. 2. Such external sensors and actuators are accessed via one or more input/output interfaces 311, which could be wired connections, such as USB, a wireless connection, such as Bluetooth, WiFi, or NFC, or direct connection to the processor via GPIO, SPI, or I²C. An input/output interface 311 may also be used to access the network 101.

The processor 303 and memory 305, which may be multiple memory modules of different forms, e.g., RAM, NVM, and ROM, maybe co-located on one integrated circuit chip 313, referred to herein as *IoT chip* or *IoT IC.*

Low level functions of the processor 303, such as an execution pipeline 315 is configured to execute programs that may be stored in firmware 317. Firmware 317 is typically stored permanently or semi-permanently in memory 305 of the IoT chip 313 at the time of manufacture. Intermediary abstractions such as how to execute specified instructions, i.e., instructions corresponding to a given opcode, is included in the firmware 317.

Many processors operate using an instruction execution pipeline 315. An instruction execution pipeline has a number of stages or steps that are executed in sequence, such that the output of one stage forms the input of the subsequent stage. In one common example, these stages include:
1. Instruction fetch
2. Instruction decode and register fetch
3. Execute
4. Memory access
5. Register write back

In the *instruction fetch* phase, one instruction is read from an instruction memory, e.g., the firmware 317. The firmware 317 may include a virtual machine 321 and one or more IoT application programs 323. Thus, the execution pipeline 315 fetches instructions from the memory 305 for execution. At one level of abstraction, the firmware fetches instructions from the virtual machine 321, which in turn interprets application programs, for example, the IoT application programs 323.

The present technology provides for diversification and obfuscation of IoT applications as well as of IoT virtual machines and IoT firmware.

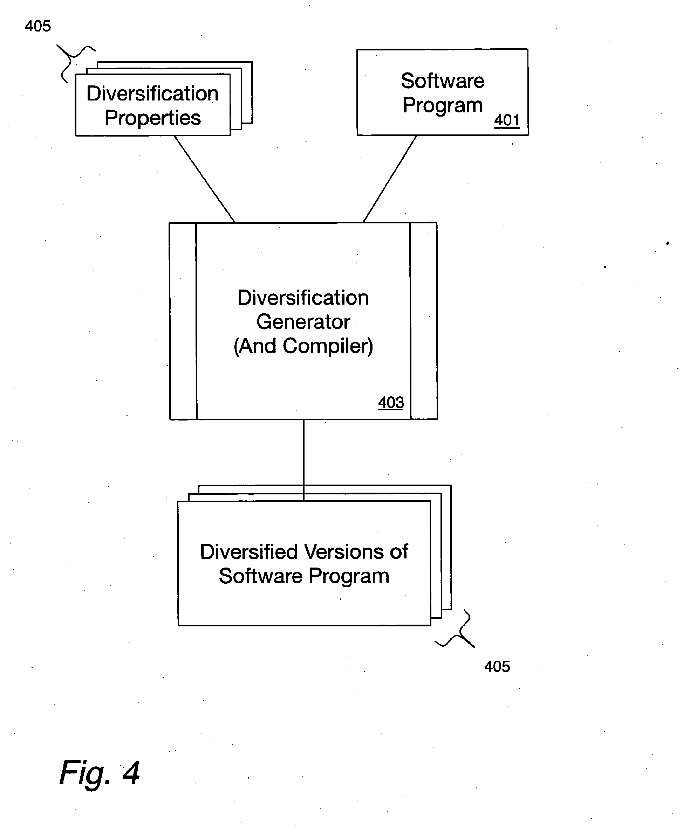

FIG. 4 illustrates a process flow for diversification of a software program 401. In the illustration of FIG. 4, the software program 401 may be either an IoT application 323, an IoT virtual machine 321, or the firmware 317.

The software program 401 is input into a diversification generator 403. For each unique set of diversification parameters 405, also input to the diversification generator 403, the diversification generator 403 produces a unique diversified version 405 of the software program 401. As noted, the diversified versions 405 while having unique characteristics, e.g., a unique memory layout, due to the diversification operation, the diversified versions 405 are functionally equivalent to one another.

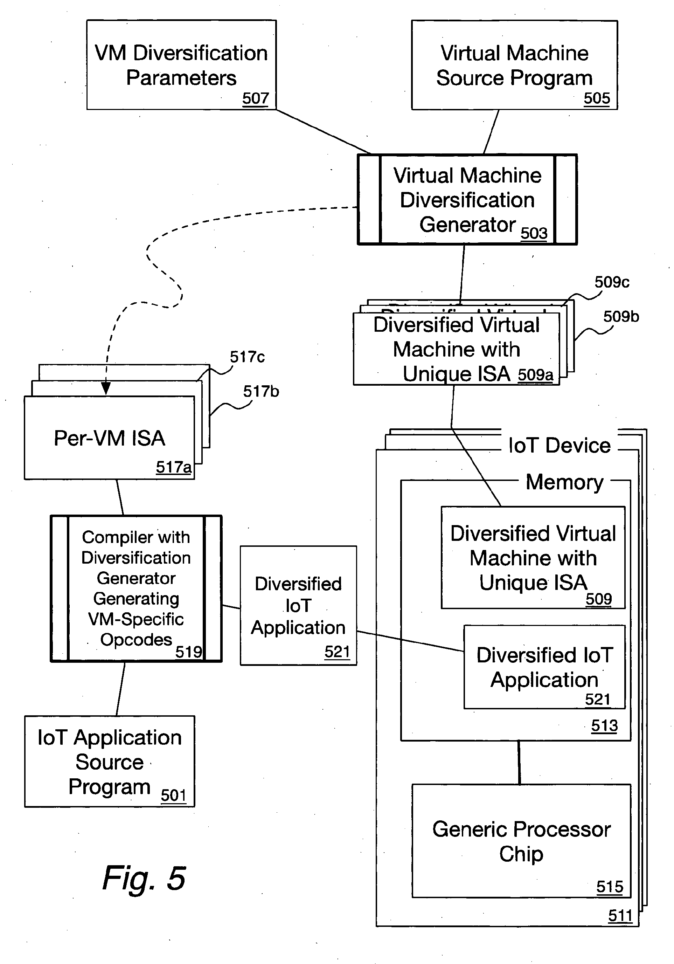

FIG. 5 is a flow diagram illustrating process and data flow in an embodiment in which both an IoT application source program 501, corresponding to the IoT application 323 of FIG. 3, and a virtual machine 505, corresponding to virtual machine 321 of FIG. 3, are diversified. The correct diversification of the IoT application 501 places it in condition for correct operation with a matching diversified virtual machine. Conversely, correct diversification of the virtual machine 505 places it in condition for correct execution by diversified firmware (not shown) of the processor chip 515.

As discussed in conjunction with FIG. 4, a virtual machine diversification generator 503, corresponding to the diversification generator 403, accepts a virtual machine source program 505 and virtual machine diversification parameters 507 as inputs and produces a diversified virtual machine program 509. The diversified virtual machine 509 may be in the form of opcodes or a loadable executable.

The virtual machine diversification generator 503 produces a diversified virtual machine 509 having a unique Instruction Set Architecture (ISA). An aspect of an ISA is mapping of instructions to opcodes. Consider, for example, a few Java instructions:

**Table 1: A few standard Java bytecode instructions and associated standard Java opcodes**

| Instruction Mnemonic | Opcode (in hexadecimal) | Description (without all details) |
|---|---|---|
| iconst_0 | 03 | load a reference onto the stack from a local variable |
| idiv | 6c | divide two integers |
| istore_1 | 3c | load a double value |
| isub | 64 | int subtract |
| goto | a7 | goes to branchoffset |
| iinc | 84 | increment local variable |
| ior | 80 | bitwise int OR |
| iload_1 | 1b | load an int value from local variable 1 |
| iand | 7e | bitwise int AND |
| bipush | 10 | push a value to the stack as an integer value |
| if_icmplt | a1 | Branches to *branchoffset* if first operand is less than second operand |
| return | b1 | return void from method |

Consider the following program:

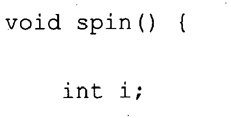

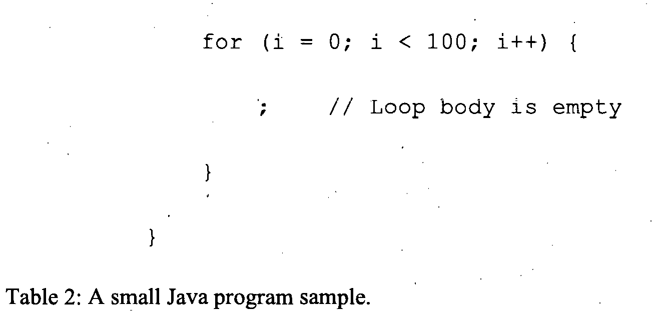

The small program of Table 2, which merely makes 100 iterations of an empty loop, could compile into the bytecodes of Table 3.

**Table 3: compiled opcodes corresponding to program of Table 2 produced by a standard Java compiler**

| Mnemonic | | Opcode |
|---|---|---|
| 0 *iconst_0* | // Push int constant 0 | 03 |
| 1 *istore_1* | // Store into local variable 1 (i=0) | 3c |
| *2 goto 8* | // First time through don't increment | a7 |
| *5 iinc 1* 1 | //. Increment local variable 1 by 1 (i++) | 84 |
| 8 *iload_1* | // Push local variable 1 (i) | 1b |
| 9 *bipush 100* | // Push int constant 100 | 10 |
| 11 *if_icmplt 5* | // Compare and loop if less than (i < 100) | a1 |
| 14 *return* | // Return void when done | b1 |

Each unique diversified virtual machine 509 has a unique ISA 517 and therefore a unique set of opcodes associated therewith. Thus, the assigned opcodes for three distinct diversified virtual machines 509, e.g., 509a, 509b, and 509c may be as illustrated in Table 4.

**Table 4: Opcodes for a few instructions corresponding to three different diversified virtual machines.**

| Instruction Mnemonic | Standard Java Opcode (in hexadecimal) | Opcode in ISA of a first diversified VM 509a | Opcode in ISA 517' of a second diversified VM 509b | Opcode in ISA 517" of a second diversified VM 509c |
|---|---|---|---|---|
| bipush | 10 | 3e | d6 | 51 |
| goto | a7 | f8 | 5f | b3 |
| iand | 7e | 2c | fa | f9 |
| iconst_0 | 03 | a2 | d3 | d7 |
| idiv | 6c | 9f | ac | f4 |
| if_icmplt | a1 | 71 | 3b | 3f |
| iinc | 84 | 0c | a4 | 52 |
| iload_1 | 1b | 7d | 2a | ee |
| ior | 80 | df | 1e | 7c |
| istore_1 | 3c | c4 | b9 | f6 |
| isub | 64 | f2 | 5a | 77 |
| return | b1 | 00 | b3 | eb |

If the example program of Table 2 is compiled against those three virtual machines, respectively, each resultant object program must have the correct corresponding opcodes, as illustrated in Table 5:

**Table 5: Opcodes for object programs compiled against example diversified VMs.**

| Mnemonic | | Opcode Std. | Opcode for VM 509a | Opcode for VM 509b | Opcode for VM 509c |
|---|---|---|---|---|---|
| 0 *iconst_0* | // Push int constant 0 | 03 | a2 | d3 | d7 |
| 1 *istore_1* | // Store into local var 1 (i=0) | 3c | c4 | b9 | f6 |
| 2 *goto 8* | // 1sr through don't increment | a7 | f8 | 5f | b3 |
| 5 *iinc 11* | // Incr local var 1 by 1 (i++) | 84 | 0c | a4 | 52 |
| 8 *iload_1* | // Push local variable 1 (i) | 1b | 7d | 2a | ee |
| 9 *bipush 100* | // Push int constant 100 | 10 | 3e | d6 | 51 |
| 11 *if_icmplt 5* | // Cmpr and loop if i < 100 | a1 | 71 | 3b | 3f |
| 14 *return* | // Return void when done | b1 | 00 | b3 | eb |

To be *compiled against* a target machine means that a source code program is compiled such that it is executable by the target machine either as native code or interpreted by a target virtual machine. For example, a Java program is compiled against a Java virtual machine, which means that it is compiled into Java class files which are written in Java bytecodes interpretable by a Java virtual machine.

For each IoT device 511, a unique diversified virtual machine 509 is loaded into a program memory 513. A processor 515 is connected to the program memory 513 and is operable to fetch instructions from the program memory, decode the fetched instructions, and execute them.

As noted above, the virtual machine generator receives virtual machine diversification parameters 507 and produces the diversified virtual machines 509, each of which has some unique properties, e.g., the unique ISA associated with the virtual machine associated therewith.

In an embodiment, the diversification parameters 507 are unique keys associated with each protection set, respectively. These keys are accepted by a diversification method of the virtual machine diversification generator 503. The diversification method uses the keys to produce unique ISAs and corresponding diversified virtual machines, which are thereby associated with the various protection sets, respectively.

These unique per-VM ISAs 517 are provided to a compiler with a diversification generator 519 used to compile application programs for the IoT devices 511. The per-VM ISAs 517 may be indexed by an identifier (ID) that uniquely links a diversified VM 509 to a protection set. For example, if a protection set is for a particular customer, that customer has a unique ID that links a unique diversified VM 509 corresponding to that customer. Similarly for other customers and other protection sets, e.g., batches, models, individual chips.

Thus, the compiler 519, when preparing a diversified IoT application 521, for a particular protection set identified by an ID, from the IoT application source program 501, the compiler 519 retrieves the per-VM ISA 517 for the diversified virtual machine 509 associated with that ID and compiles the IoT application source program accordingly. The diversified IoT application 521 is then loaded into the memory 513 of the IoT device 511 corresponding to the protection set and consequently including the corresponding diversified virtual machine 509.

In an alternative, the diversification parameters 507 are input to the compiler with diversification generator, which then is programmed with the diversification method and can thereby generate the correct ISA for the protection set that that IoT source program 501 is compiled against.

The above process may then be repeated for each protection set with the result that unique diversified IoT applications and unique diversified virtual machines are loaded into the IoT devices corresponding to each protection set. The diversified IoT applications can only be executed on the correct IoT devices and vice versa.

Consequently, if an attacker successfully reverse engineers either the diversified IoT application or the diversified virtual machine, the attacker can make no use of the knowledge gained because such a reverse engineered program would not be executable on any of the other diversified virtual machines and a reverse engineered virtual machine would not be able to execute any of the other diversified IoT applications as there would be a mismatch in opcodes in either case.

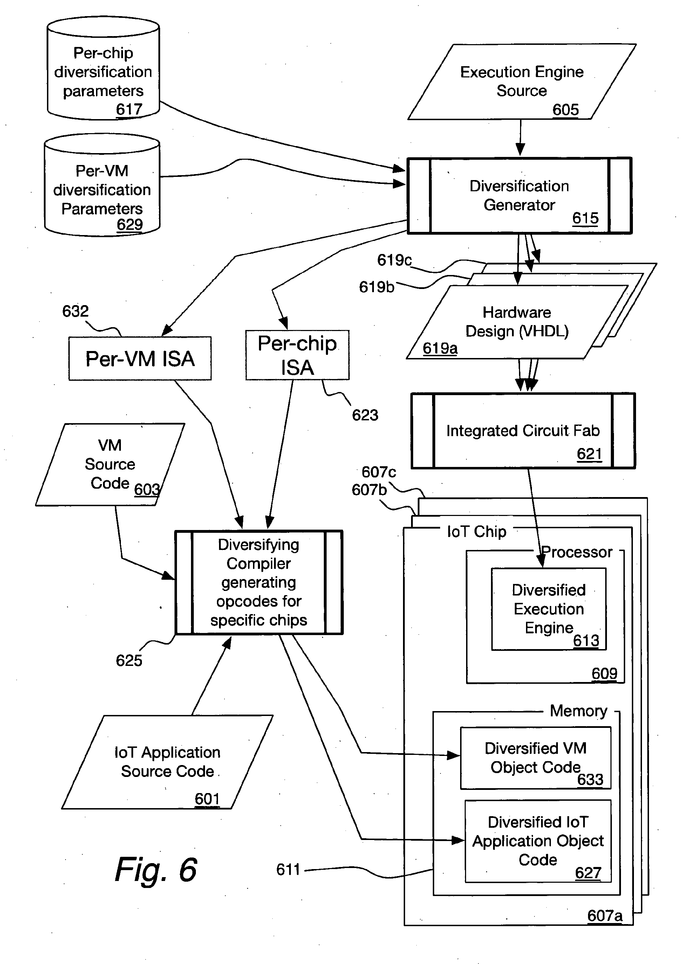

FIG. 6 is a flow diagram illustrating an alternative process and data flow in which both an IoT application source program 601, corresponding to the IoT application 323 of FIG. 3, a virtual machine source code 603, corresponding to virtual machine 321 of FIG. 3, and a hardware execution engine source code 605 are diversified. There are many similarities between the process flow of FIG. 6 and those of FIG. 5. These similarities are not repeated here.

In this alternative embodiment, the target machines are IoT integrated circuits (or IoT chips) 607 analogous to IoT chip 313 of FIG. 3 and that is incorporated into an IoT device (not shown; however, analogous to IoT devices 121 of FIG. 1, 209 of FIG. 2 and 301 of FIG. 3). The IoT chips 607 each includes a processor 609 and a memory 611. The reference to IoT chip 607 is to a member of a set of IoT chips 607a, b, c, etc., each having a unique diversified execution engine 613 and unique diversified virtual machine object code 633.

In this alternative embodiment, a diversified execution engine 613 of the processor 609 has an ISA with a unique set of opcodes corresponding to a particular protection set identified by an ID. In an embodiment, those opcodes are uniquely mapped into native code opcodes of the target processor 609.

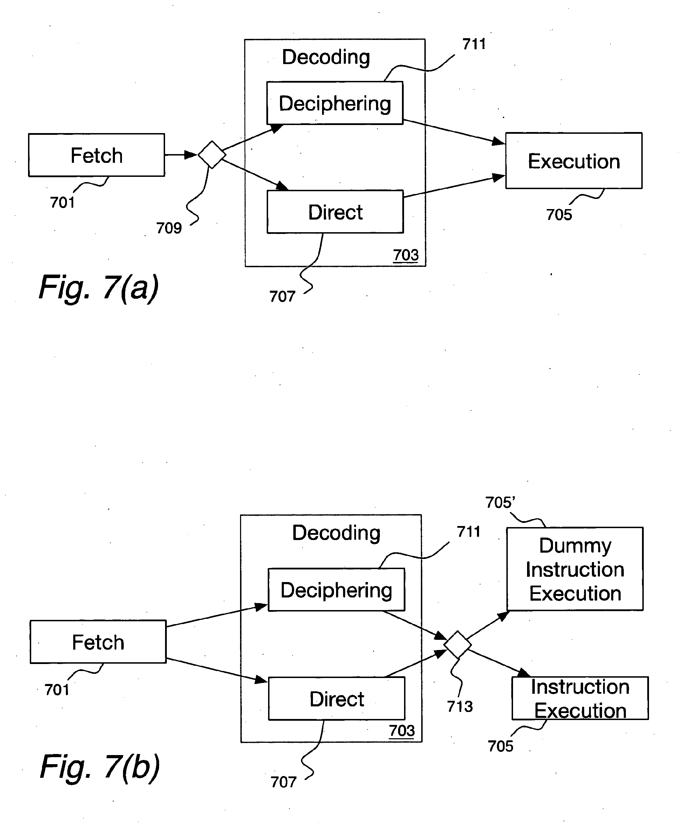

In an alternative, discussed in greater detail in conjunction with FIG. 7, the diversified execution engine 613 is capable of processing instructions compiled against multiple ISAs associated with different protection sets, which maybe hierarchically related to one another.

A diversification generator 615 accepts an execution engine source code 605, which may be a generic execution engine design, and per-chip diversification parameters 617. From the input execution engine source code 605 and the per-chip diversification parameters database 617, the diversification generator 615 produces a plurality of hardware designs 619, e.g., in the form of VHDL, that include specification for hardware layout for a diversified execution engine 613 for each set of per-chip parameters stored in the per-chip diversification parameters database 617 having the unique ISA for the diversified execution engine 613.

The IoT chip hardware designs 619 are used by an integrated circuit fab 621 to produce unique IoT chips 607 corresponding to each set of per-chip parameters.

The diversification generator 615 also produces a database of per-chip ISAs 623 that a diversifying compiler 625 uses to compile IoT application source code 601 against specific IoT chips 607 to produce diversified IoT application object code 627 for each unique IoT chip design, i.e., corresponding to each protection set.

The diversification generator 615 may also generate per-VM ISAs 632 used to generate unique virtual machine object code for each protection set based on per-VM diversification parameters 629, e.g., corresponding to each protection set. The diversifying compiler 625 accepts VM source code 603, the per-chip ISA 623, and the per-VM ISA 629 to produce the diversified VM object code 633 that is then capable of interpreting programs compiled against the per-VM ISA 629 when executed by the diversified execution engine 613.

In an embodiment, the diversification parameters 617 and 629 are unique keys associated with each protection set, respectively. These keys are accepted by a diversification method of the diversification generator 615. The diversification method uses the keys to produce unique ISAs and corresponding diversified execution engines and diversified virtual machines, which are thereby associated with the various protection sets, respectively.

In a preferred embodiment the encoding of opcodes is made on basic blocks, i.e., linear sequences of code that have no jumps.

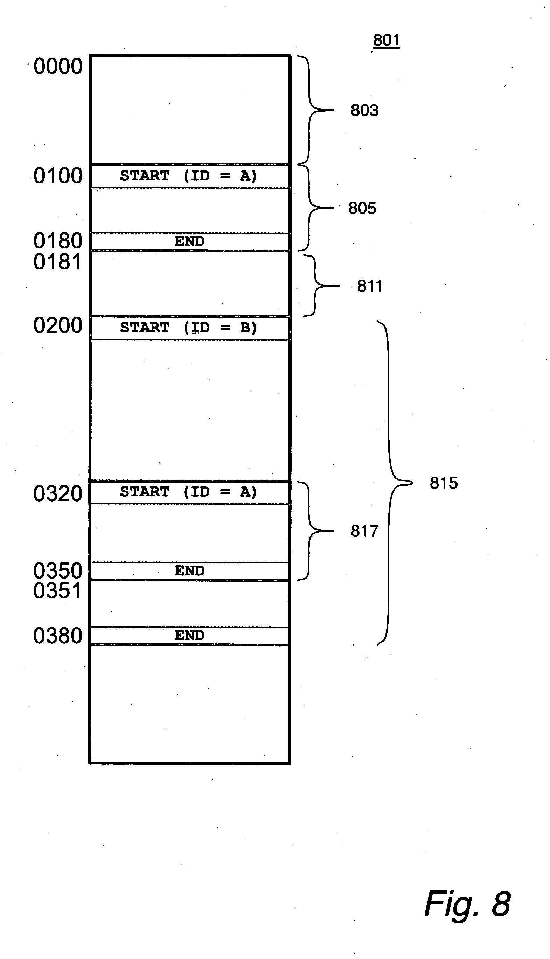

FIG. 7, which consists of FIG. 7(a) and FIG. 7(b), is a schematic illustration of an alternative embodiment that includes an instruction fetch cycle 701 for detecting from which protection set to convert ciphered opcodes to native opcodes of a target processor. FIG. 8 is a program layout of a program 801 having instructions segments that are compiled against different ISAs. In a first program section 803, the diversification compiler 625 has inserted opcodes that are native to the processor 609.

In a second section 805, the program 801 contains instructions encoded into an ISA corresponding to a protection set having an identifier (ID) equal to A. For example, this protection set could correspond to all IoT devices of a particular device family identified by identifier A. That section is introduced with an instruction or directive at address 0100 specifying the start of a section of encoded opcodes is starting with the following instruction.

The counterpoint to the start instruction or directive is an end instruction or directive ("**END**") , which ends a section of encoded opcodes. Thus, the end of the first encoded section of opcodes 805 ends with the **END** instruction at location 0180. That returns to an unencoded section 811.

A **START** instruction at location 0200 starts a second encoded section 815 that is encoded against an ISA corresponding to protection set ID=B. That section has a nested encoding section 817 starting with instruction at location 0320, which is encoded against ISA with ID=A.

After the first **END** instruction at location 0350, encoding reverts to the prior encoding, i.e., that corresponding to ID=B as specified with the instruction at location 0200.

Returning now to FIG. 7, which illustrates in FIG. 7(a) a first embodiment process flow of an execution pipeline of the diversified execution engine 613 for processing program sequences as illustrated in FIG. 8. In particular, an instruction fetch stage 701, an instruction decode stage 703, and an instruction execution stage 705 are illustrated.

Instructions are retrieved from a program in a fetch stage 701. For all instructions that are not instructions or directives indicating a start or end of an opcode encoding section, instructions are decoded 703 according to the current opcode encoding section. If the code section being processed is native opcodes, direct execution 707 occurs. However, if an instruction or directive starting an opcode encoding section is encountered, decision box 709, then fetched opcodes are deciphered 711 as required by the diversified ISA corresponding to the ID specified in the start instruction or directive.

Consider, for example, the native opcodes indicated in Table 6 (below) and corresponding encoding for two protection sets.

**Table 6: Example native codes and corresponding encoded opcodes for two protection sets.**

| Instruction Mnemonic | Native Opcode (in hexadecimal)¹ | Opcode in ISA A corresponding to a first protection set A | Opcode in ISA B corresponding to a second protection set B |
|---|---|---|---|
| ADD A | 87 | 3e | d6 |
| ADD B | 88 | f8 | 5f |
| CMP A | bf | 2c | fa |
| CMP B | b8 | a2 | d3 |
| PUSH B | c5 | 9f | ac |
| POP D | d1 | 71 | 3b |
| INC Adr | d2 | 0c | a4 |
| LDA Adr | 3a | 7d | 2a |
| GRA B | b0 | df | 1e |

| | | | |
|---|---|---|---|
| ¹ The native code opcodes of Table 6, which are merely used here as an example, are based on Intel 8080 opcodes. | | | |

In the example of Table 6, if the execution pipeline has encountered a start instruction indicating that an encoded opcode section for ISA A is being processed, if an opcode a2 is fetched, it is deciphered as b8, the corresponding native code opcode. The deciphered opcode is passed to the execution stage 705. However, in section 815 outside of section 817, received opcodes are deciphered from ISA B to the native opcodes. Thus, if in that section an opcode 2a is fetched, for example, the opcode is deciphered into 3a, the corresponding native code opcode. Through the special directives START and END, illustrated in FIG. 8, the specific chip execution engine, which has been diversified for a particular protection set, switches interpretation according to whether the opcodes are encoded or not, and if encoded, switches interpretation according to which protection set the opcodes correspond.

A drawback to the mechanism of FIG. 7(a) is that there is a selection between which circuitry is being engaged for when encoded program sequences are processed versus unencoded program sequences. Such ON/OFF switching of processing code may be exploited in side-channel attacks.

FIG. 7(b) is a schematic illustration of an alternative embodiment in which the execution pipeline stage 705 is paralleled with a dummy execution pipeline stage 705' to alleviate the drawback identified in the mechanism of FIG. 7(a). In the embodiment of FIG. 7(b) all fetched instructions are treated as both native code instructions and encoded instructions. Thus, if, at decision point 713, fetched opcodes are native code opcodes, i.e., not needing deciphering, a deciphered version of the opcode is sent to the dummy execution stage 705'. The deciphered version of the native opcode is a dummy opcode that only serves the purpose of fooling a potential attacker by not turning OFF or ON the passing of instructions through the deciphering stage 711.

Conversely, when fetching instructions from encoded sections of program code, the encoded opcodes are passed directly to the dummy execution pipeline stage 705'.

Thus, regardless of whether an opcode is encoded or a native opcode, all the circuitry associated with the pipeline stages of FIG. 7(b) are executed.

In other words, when ciphering has been turned ON by a START directive, the deciphering stage deciphers the fetched opcodes and passes these on to the non-dummy instruction execution stage 705'. In parallel, the direct execution path 707 passes the fetched opcodes to the dummy instruction execution stage 705'. This pattern continues until the END directive is fetched.

Conversely, when ciphering is OFF, i.e., before being turned on or after being turned OFF by an END directive, the deciphering stage 711 deciphers the opcodes, which results in illegal opcodes (or at least unintended opcodes). These illegal opcodes are passed to the dummy instruction execution stage 705' while the fetched opcode, which in this case is the intended opcode, is passed to the non-dummy instruction execution stage 705. The dummy instruction execution stage 705', not intended to produce results used by the program being executed, performs a dummy execution regardless of the received opcode and thus does not crash if an illegal opcode or illogical opcode is presented to it.

In an embodiment, the mechanisms set forth in FIGs. 7(a) and 7(b) are implemented at the microcode level of the IoT chip 607. Thus, the requisite deciphering mechanisms are inserted into the hardware design 619 by the diversification generator 615 such that when the IoT chips 607 are manufactured in the IC fab 621, the deciphering mechanism corresponding to the per-chip diversification parameters 617 are hardcoded into the hardware of the IoT chip 607.

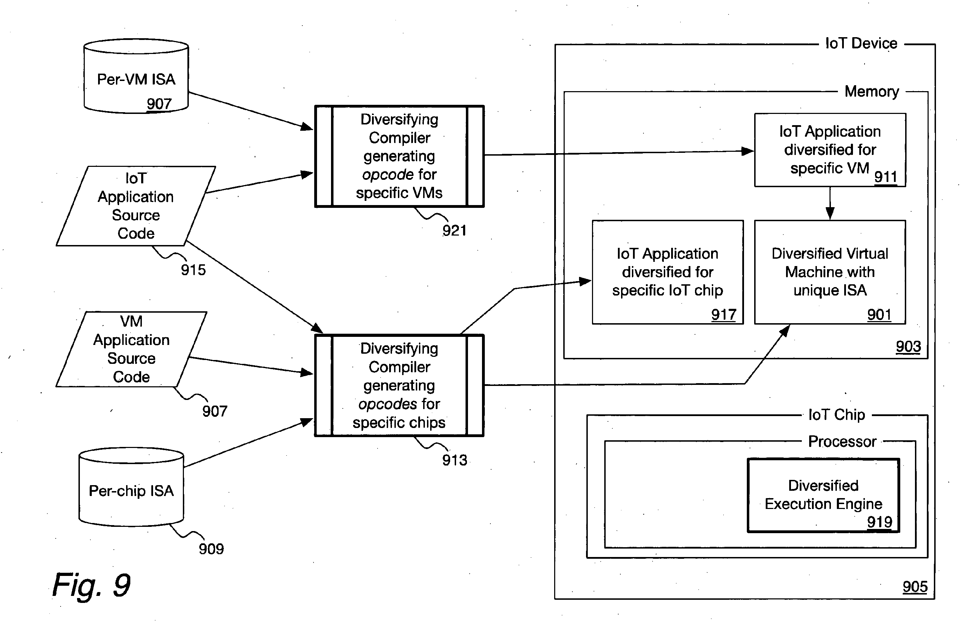

FIG. 9 is a schematic illustrating an embodiment with a combined mechanism in which the mechanisms of FIGs. 5 through 7 are combined into an integrated mechanism that provides for diversified IoT applications, a diversified software virtual machine, a diversified hardware virtual machine, and a diversified execution engine for executing encoded opcodes.

A diversified virtual machine 901, obtained as discussed herein above, for example, in conjunction with FIG. 5, is loaded into a memory 903 of an IoT device 905. As described in conjunction with FIG. 5, virtual machine source code 907 is diversified with per-chip ISA 909 by a diversifying compiler 913, which produces opcodes for specific chips corresponding to specific protection sets. The resulting diversified virtual machine 901 is installed in the memory 903 of the IoT device 905. Similarly, an IoT application source code 915 may be input into the diversifying compiler 913 that generates chip specific opcodes and the resulting diversified IoT application 917, which is the result from the diversification process based on unique per-chip properties 909 is stored in the memory 903. The diversifying compiler 913 produces opcodes specific to a particular chip or combination of protection sets as illustrated in FIG. 8. These opcodes specific to a particular chip are executable, as discussed in conjunction with FIGs. 7 and 8, by a diversified execution engine 919, which is analogous to the diversified execution engine 613 of FIG. 6.

Thus, the diversifying compiler 913 generates opcodes executable by a hardware diversified execution engine 919. The hardware diversified execution engine 919 is obtained from a diversification generator analogous to the diversification generator 613 that produces a hardware design 617, e.g., VHDL code, implementing the logic of a virtual machine operable to interpret a subset of an intermediate language, e.g., a Java bytecode subset, in hardware.

An IoT application source code program 915 is processed by either or both of a diversifying compiler 921 that produces opcodes for the software diversified virtual machine 901, resulting in an executable diversified IoT application 911 that is executable by the diversified virtual machine 901, or the diversifying compiler 913 that produces opcodes for the hardware diversified execution engine 919, i.e., resulting in a hardware-executable diversified IoT application 9.17 that is executable by the diversified execution engine 919. In the former case, the diversified IoT application 911 executable by the diversified virtual machine 901 is loaded into the memory 903 of the IoT device 905.

Thus, similar to the mechanism illustrated in FIG. 8, portions of an IoT application 915 may be written to be processed in part by each of the diversified software virtual machine 901 or the diversified execution engine 919.

From the foregoing it will be apparent that an efficient and secure mechanism for mechanism for protecting IoT devices and software installed on IoT devices from attacks is provided. The disclosed mechanisms include multiple levels of diversification of IoT application programs as well as virtual machines and execution engines for executing IoT application programs on IoT devices deployed into white-box environments.

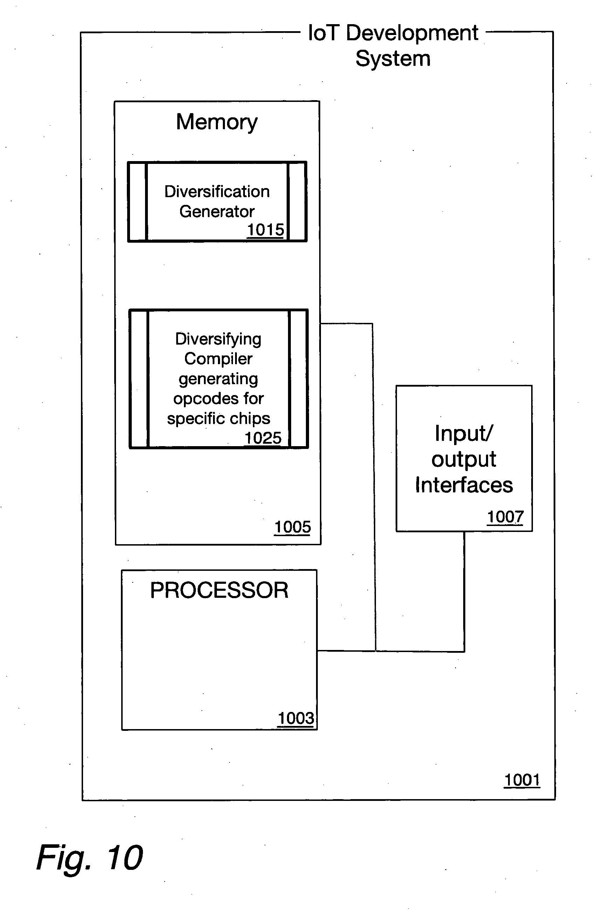

FIG. 10 is a block diagram illustrating an architecture for an IoT development system 1001 programmed to implement the methods described hereinabove. The IoT development system 1001 includes a processor 1003 and a memory 1005. The memory 1005 includes programs executable by the processor 1007. These programs include a diversification generator 1015, corresponding to, for example, the diversification generator 615 of FIG. 6, and a diversifying compiler 1025, corresponding to, for example, the diversifying compiler 625 of FIG. 6. The IoT development system 1001 further includes input/output interfaces 1007, for example, to receive source programs, such as virtual machine source code and IoT application source code, that are to be diversified. The input/output interfaces 1007 may also be used to output diversification results, such as the per-VM and per-chip ISAs 632 and 623, diversified VM object code 633, diversified application object code 627, and hardware design (VHDL) 619.

While FIG. 10 depicts an IoT development system 1001 that integrates the various diversification modules and diversifying compilers described hereinabove, in actual practice, these functions are likely not performed by the same machine and any one machine may implement a subset of such functions.

Although specific embodiments of the invention have been described and illustrated, the invention is not to be limited to the specific forms or arrangements of parts so described and illustrated. The invention is limited only by the claims.

## Claims

1. A method securing Internet of Things (IoT) devices by compiling IoT applications against diversified virtual machines, the method comprising:
defining at least a first and a second IoT protection set and assigning a first diversification parameter to the first IoT protection set and a second diversification parameter to the second IoT protection set wherein each of a plurality of IoT devices is associated with the first or the second IoT protection set;
diversifying a virtual machine into a first diversified virtual machine by compiling the virtual machine using the first diversification parameter to define a first instruction set architecture (ISA) having a first set of opcodes interpretable by the first diversified virtual machine and incorporating the first diversified machine into firmware of IoT devices associated with the first protection set, and diversifying the virtual machine into a second diversified virtual machine by compiling the virtual machine using the second diversification parameter to define a second ISA having a second set of opcodes interpretable by the second diversified virtual machine and incorporating the second diversified virtual machine into firmware of IoT devices associated with the second protection set;
compiling an IoT application against the first diversified virtual machine to generate a first diversified object program corresponding to the IoT application and solely executable by the first diversified virtual machine by applying the first diversification parameter, and compiling the IoT application against the second diversified virtual machine to generate a second diversified object program corresponding to the IoT application and solely executable by the second diversified virtual machine by applying the second diversification parameter; and
loading the first diversified object program onto IoT devices associated with the first protection set and loading the second diversified object program onto IoT devices associated with the second protection set.

2. The method of Claim 1 further creating a diversified hardware implementation of an IoT device in the step of diversifying the virtual machine into the first diversified virtual machine by, generating a chip-design for a portion of an IoT chip installable into an IoT device such that the IoT chip is diversified, said portion including opcodes of the diversified virtual machine.

3. The method of Claim 1 further comprising diversifying the IoT application such that the first protection set is assigned a first diversified IoT application, and the second protection set is assigned a second diversified IoT application wherein the first diversified IoT application and second diversified IoT application are functionally identical.

4. The method of Claim 1 wherein the first diversification parameter and second diversification parameter are each a diversification key associated with the first protection set and second protection set, respectively, that may be accepted by a diversification method to produce a unique ISA.

5. The method of Claim 1 wherein
the step of compiling an IoT application against the first diversified virtual machine comprises compiling a first subset of basic blocks of the IoT application against the first ISA; and
operating the first virtual machine of the IoT device to recognize ciphered basic blocks and deciphering the ciphered basic blocks prior to execution.

6. The method of Claim 5 wherein
the step of compiling an IoT application against the first diversified virtual machine comprises ciphering a third subset of basic blocks of the IoT application using a third diversification parameter associated with a third IoT protection set.

7. The method of Claim 5 wherein the deciphering step is performed by a deciphering hardware block activated by instruction fetch of a start instruction introducing a basic block as being ciphered and executing deciphered instructions using a standard instruction set architecture.

8. The method of Claim 7 further comprising:
in execution of a diversified IoT application,
detecting ciphered basic blocks, deciphering the ciphered basic blocks producing deciphered basic blocks and executing the deciphered basic blocks by a dummy execution engine and, in parallel, executing the ciphered basic block by a non-dummy execution engine; and
detecting unciphered basic blocks, deciphering the unciphered basic blocks producing dummy deciphered basic blocks and executing the dummy deciphered basic blocks by the dummy execution engine, and, in parallel, executing the unciphered basic block by the non-dummy execution engine.

9. The method of Claim 1 wherein the diversification of the virtual machine includes diversifying the instruction set architecture such that a unique set of opcodes or bytecodes are assigned to each of the first and second protection sets, respectively.

10. The method of Claim 1 wherein the diversification of the virtual machine includes diversifying the instruction set architecture into a plurality of diversified instruction set architectures assigned to each of the first and second protection sets, respectively, and wherein the compilation of the IoT application against said first diversified virtual machine and said second virtual machine further comprises selecting one of said diversified instruction set architectures for compiling against.

11. The method of Claim 1, further wherein the first and second IoT protection sets are members of a class of protection sets.

12. The method of Claim 11 where the class of protection sets is selected from a set of device categories including device family, device model, customer, device batch, and device chip.

13. The method of Claim 12 wherein the set of device categories form a hierarchy.

14. The method of Claim 13 wherein the device category of the first or second protection set is selected during a manufacturing phase.

15. The method of Claim 13 wherein the device category of the first or second protection set is selected during a device issuance phase by selecting a protection set for a device or class of devices in conjunction with compiling the IoT application.

16. The method of claim 1 further comprising:
providing a device issuer with a database of protection sets and diversification parameters; and
wherein the step of compiling comprises retrieving a diversification parameter corresponding to the protection set of a target device.

17. A computer system comprising a processor and a memory, the memory containing instructions executable by the processor for carrying out any of the methods of claims 1 through 16.

18. A non-transient computer memory comprising instructions executable by a processor for carrying out any of the methods of claims 1 through 16.
